# EUROPEAN PATENT APPLICATION

(11) **EP 4 197 674 A1**
(43) Date of publication of application: **21.06.2023**
(21) Application number: 21020644.7
(22) Date of filing: 17.12.2021
(51) Int. Cl.: B22F 9/08

(54) **CONTROLLED ATMOSPHERE AND OPTIMISED ATOMISATION FOR POWDER PRODUCTION**

(71) Applicant: Linde GmbH, 82049 Pullach (DE)
(72) Inventor: Bauer, Dominik, 82049 Pullach (DE); Dubiez - Le Goff, Sophie, 82049 Pullach (DE)
(74) Representative: Gellner, Bernd

(57) **Abstract**

A method of producing a metal powder, the method comprising providing a stream of molten metal, atomising the metal into a plurality of metal particles having differing sizes by directing a first jet of fluid towards the stream of molten metal, providing a second jet of fluid towards the stream of molten metal to suppress recirculation of the metal particles which diameter is sufficient to form satellites, wherein the second jet of fluid comprises an inert gas and a dopant gas, the dopant gas configured to control oxidation of a surface of the metal particles.

## Description

### TECHNICAL FIELD

The present invention relates generally to a method for use in producing metal powder. In particular, but not exclusively, the present invention relates to a method of producing a metal powder for use in additive manufacturing process.

### INTRODUCTION

In general, additive manufacturing (AM) is a manufacturing technology that includes a methodology whereby a heat source melts a feedstock of material which is deposited onto a substrate. Computer control of the movement of the heat source, and the source of the feedstock, makes it possible to build complex components.

As mentioned above, in AM the material is deposited layer by layer. Some AM methods, for example, melt or soften the material to produce the layers, such as selective laser melting (SLM) or direct metal laser sintering (DMLS), selective laser sintering (SLS), fused deposition modelling (FDM), or fused filament fabrication (FFF). These AM processes are summarized by the term laser powder bed fusion (L-PBF).

For these processes a metal powder is normally used, and for the repeatability of the process it is important to have a powder material with reproducible morphological characteristics, such as shape and size. To provide optimal performance in AM operations, it is often desirable that the particles in the powder are as close as possible to spherical, and that they have a narrow size distribution. This facilitates good packing of the powder and allows the powder to flow well.

Water atomisation, whereby the molten metal is treated with a stream of water at high pressure reaching 1000 bar, is one of the techniques to produce powder for AM.

Another technique to produce powder is gas atomisation, whereby an argon gas or a mixture of argon and nitrogen are used to atomise molten metal. For both of these atomisation techniques, the resultant metal particles are then sieved into fractions having predetermined size distributions.

Metal alloys in liquid phase are very reactive therefore there is a need to passivate both the molten metal and the resultant powder particles. Also, in gas atomisation there is a problem of recirculating the smaller particles into the atomisation area. This leads to a formation of satellites and uneven particle size distribution.

It is an object of this invention to at least mitigate one or more problems associated with the prior art and to provide a method for producing a metal powder for AM process.

One or more of these problems are solved by a method according to independent claim 1. Advantageous embodiments are defined in the sub-claims.

According to an aspect of the invention for which protection is sought, there is provided a method of producing a metal powder, the method comprising:
- providing a stream of molten metal,
- atomising the metal into a plurality of metal particles having differing sizes by directing a first jet of fluid towards the stream of molten metal,
- providing a second jet of fluid towards the stream of molten metal to suppress recirculation of the metal particles which diameter is sufficient to form satellites, wherein the second jet of fluid comprises an inert gas and a dopant gas, the dopant gas configured to control oxidation of a surface of the metal particles.

Advantageously, by providing a second jet of fluid into the atomisation area prevents satellite formation. The presence of the dopant gas in the second jet of fluid passivates and/or chemically reduces the surface of the metal particles. Furthermore, the presence of a second jet of fluid during the atomisation process is also believed to promote the formation of spherical particles. Advantageously, the presence of the spherical or near-spherical particles allows for an enhanced powder flowability and better bulk density which, in turn, will lead to a better quality of the finished product. Smooth round particles possess better packing properties and therefore spread more evenly on the powder bed and form a uniform layer.

In an embodiment, the dopant gas is carbon monoxide, carbon dioxide, sulphur dioxide, and mixtures thereof. Advantageously, the presence of a reactive dopant gas aids passivation and prevents formation of undesired compounds on the surface of metal particles formed during the atomisation process.

In another embodiment, the inert gas is nitrogen, argon, helium, or mixtures thereof. Advantageously, by using various gases and/or their mixtures it is possible to create an optimal inert atmosphere with the most suitable characteristics that are tailored to the material to be atomised.

In yet another embodiment, the metal is iron, titanium, nickel, aluminium, copper, or alloys thereof. Advantageously, such a choice of metals allows for producing a wide variety of components for automotive, industrial, food processing and medical applications.

In another embodiment, the inert gas comprises 1-2% dopant gas.

In an embodiment, the first and the second jet of fluid are pressurised. Advantageously, by pressurising the fluids it is possible to achieve high fluid velocities before colliding the fluid with a molten stream of metal. This results in more efficient break down of the molten metal into droplets before the powder solidification occurs.

In another embodiment, the first jet of fluid is supplied through a nozzle. In yet another embodiment, the nozzle is a convergent-divergent nozzle. Advantageously, supplying both molten metal and the pressurised fluid through the nozzle having both a divergent and a convergent section allows for better mixing at the point of exit of the two components due to a change in the speed of the components at the narrowing point, and thus preventing blockage of the nozzle opening.

### BRIEF DESCRIPTION OF THE DRAWINGS

Embodiments of the invention will now be described by way of example only, with reference to the accompanying figures, in which:
Figure 1 shows a prior art system for producing metal powder using an atomisation process;
Figure 2 shows a schematic view an atomiser according to the present invention;
Figure 3 shows an atomiser according to the embodiment of the present invention; and
Figure 4 shows a flow chart illustrating a method of producing a metal powder in an embodiment of the present invention.

### DETAILED DECSRIPTION

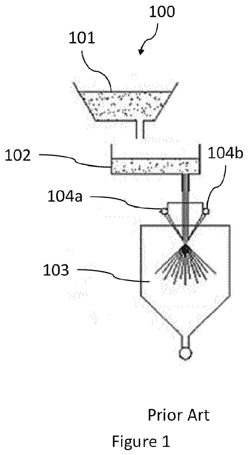

Figure 1 shows a prior art atomisation system 100 for producing metal particles for AM. The metal is supplied into a ladle or a melter 101 where it is heated up to the desired temperature, and then transferred into a tundish 102 to avoid splashing and give a smoother flow. A stream of the molten metal is then supplied into an atomising chamber 103 where it is mixed with a fluid supplied through the nozzles 104a, 104b. The molten metal then undergoes an atomisation process under contact with fluid to form micron sized particles. It is understood that the fluid is supplied into the chamber 103 under pressure. The fluid can be either a gas or water, depending on the process to be used.

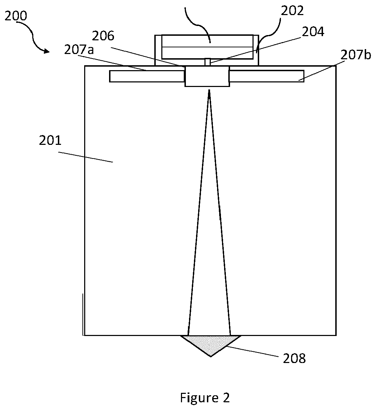

Figure 2 shows a system 200 to be used for producing metal powder according to an embodiment of the present invention. It comprises the chamber 201 where the mixing of the metal and the jets of fluid occurs, and the furnace 202 connected to the chamber. A metal 203 is supplied to the furnace 202 and is subsequently heated to reach the melting temperature. It is understood that the metal 201 can be iron, titanium, nickel, aluminium, copper, or alloys thereof. The temperature in the furnace 202 depends on the type of metal or metal alloy and must be sufficient to maintain the metal in a molten state.

The molten metal 203 is then supplied into the chamber 201 through an opening 204. The molten metal 203 then is treated by a first jet of fluid inside an atomiser 206, the working principle of which will be describe herein below. The molten metal then passes through a second jet of fluid inside the atomiser 206 wherein the second jet creates swirls of fluid and thus prevent satellite formation.

It is understood that the first and the second jets of fluid can be an inert gas, such as nitrogen, argon, helium, or mixtures thereof. The inert gas will not react with the metal which is normally highly reactive in the molten state.

The second jet of fluid can be doped with a dopant gas. It is understood that the dopant gas can be any one of carbon monoxide, carbon dioxide, sulphur dioxide, and mixtures thereof. The purpose of the dopant gas is to suppress the surface oxidation that can come from the impurities present in the metal. The concentration of the dopant gas in the second jet of fluid can be 1-2% of the inert gas.

The fluid may be supplied into the chamber under pressure, in which case a pressure system 207a, 207b may be used. The molten metal is supplied through a nozzle (not shown). It is understood that different kind of nozzles can be used, such as Venturi nozzle or de Laval nozzle, with the latter being preferential choice of nozzle. Advantageously, by using the de Laval, or divergent-convergent, nozzle it is possible to achieve higher acceleration rates of the passing fluid, thus resulting in a better mixing of the fluid with the molten metal.

It is known that during conventional gas atomisation process of metal particles manufacturing, the surface of the particles can become oxidised. This is disadvantageous as the final composition of the alloy will change, thus in turn changing its physico-chemical properties. In the present invention this problem is alleviated by using *in situ* the dopant gas as a passivating medium.

Furthermore, it has been discovered that by using a second jet of fluid, or a secondary gas flow, it is possible to atomise a large amount of molten metal whilst better controlling the shape and size of the resultant metal particles.

As a result of interaction of molten metal with the first and second jets of fluid, the solid spherical or near-spherical uniform particles of metal powder 208 free from unwanted satellites are formed and further deposited at the bottom of chamber 201. Advantageously, the formation of spherical or near-spherical particles leads to a better spreadability of the resultant powder when it is subsequently used for an AM process.

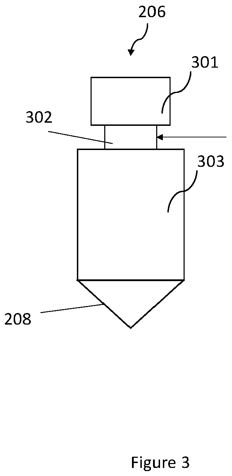

Figure 3 shows an atomiser 206 according to an embodiment of the present invention. It comprises a chamber for a primary gas flow 301 through which an inert gas like nitrogen, argon, helium, or mixtures thereof, is supplied. The atomiser 206 is further equipped with a chamber for a secondary gas flow, where the second jet of fluid is supplied. The chamber comprises a tangential secondary gas inlet that prevents particles colliding together by reducing the number of particles recirculating inside the atomiser 206. The secondary gas is introduced into the secondary gas flow chamber 302 in the direction indicated by an arrow on Figure 3. It is understood that the jet of gas opposes the circulation flow and the centrifugal forces created inside the chamber 302 preventing the fine particles entering the atomisation area 303, thus avoiding satellite formation. It is understood that the secondary gas flow can be doped with a dopant gas, said dopant gas can be a reactive gas like carbon monoxide, carbon dioxide, sulphur dioxide, and mixtures thereof. The dopant can be supplied either separately through a dedicated inlet, or premixed with the inert gas. Advantageously, the presence of a dopant gas minimises surface changes of the resultant metal particles.

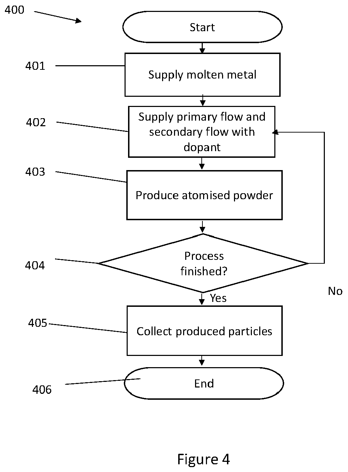

A method of producing a powder using first and second jets of fluid with the dopant gas will be described in more detail below, with respect to Figure 4.

Figure 4 shows a method 400 which is implemented by a controller. In step 401 the controller is arranged to supply a molten metal 203 through an opening 204 of the furnace into the chamber 201. In step 402 the supply of the first jet of fluid and the second jet of fluid occurs through the at least one nozzle 304. It is understood that the controller also controls the jets of fluid supply parameters, such as pressure and/or temperature. In step 403 the atomised powder 208 is produced by mixing the stream of molten metal 204 with the jets of fluid used as an atomising medium. If it is determined that all the metal has been transformed into powder, the method proceeds to step 405 at which the particles are collected. In a preferred embodiment, the powder is collected continuously during the process via the powder feed pipe. If it is determined that the molten metal is still present in the furnace 202, then the process returns to step 402 of supplying more jets of fluid into the nozzle. Once all the previous steps 401-405 are completed, the process ends 406.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### Reference signs

100 - water atomisation system
101 - ladle/melter
102 - tundish
103 - chamber
104a, 104b - nozzles
200 - atomiser
201 - chamber
202 - furnace
203 - molten metal
204 - opening
206 - atomiser
207a - pressure system
207b - pressure system
208 - powder
301 - primary gas flow
302 - secondary gas flow chamber
303 - atomisation area

## Claims

1. A method of producing a metal powder, the method comprising:
- providing a stream of molten metal (203),
- atomising the metal into a plurality of metal particles having differing sizes by directing a first jet of fluid towards the stream of molten metal,
- providing a second jet of fluid towards the stream of molten metal to suppress recirculation of the metal particles which diameter is sufficient to form satellites,
wherein the second jet of fluid comprises an inert gas and a dopant gas, the dopant gas configured to control oxidation of a surface of the metal particles.

2. The method of claim 1, wherein the dopant gas is carbon monoxide, carbon dioxide, sulphur dioxide, and mixtures thereof.

3. The method of claim 1 or 2, wherein the inert gas is nitrogen, argon, helium, or mixtures thereof.

4. The method of any preceding claim, wherein the metal is iron, titanium, nickel, aluminium, copper, or alloys thereof.

5. The method of claim of any preceding claim, the inert gas comprises 1-2% dopant gas.

6. The method of any preceding claim, wherein the first and the second jet of fluid are pressurised.

7. The method of any preceding claim, wherein the first jet of fluid is supplied through a nozzle.

8. The method of any preceding claim, wherein the nozzle is a convergent-divergent nozzle.
